# EUROPEAN PATENT SPECIFICATION

(11) **EP 1 796 195 B1**
(45) Date of publication and mention of the grant of the patent: **11.09.2013**
(21) Application number: 05787496.8
(22) Date of filing: 28.09.2005
(51) Int. Cl.: H01M 8/02, H01M 8/10

(54) **METHOD OF PRODUCING GASKET FOR FUEL CELLS**
VERFAHREN ZUR HERSTELLUNG EINER DICHTUNG FÜR BRENNSTOFFZELLEN
PROCÉDÉ DE FABRICATION DE GARNITURE POUR PILES À COMBUSTIBLE

(30) Priority: 01.10.2004 JP 2004289667
(43) Date of publication of application: 13.06.2007
(73) Proprietor: NOK Corporation, Minato-ku Tokyo 105-8585 (JP)
(72) Inventor: OKABE, Tatsuya, Fujisawa-shi, Kanagawa 2510042 (JP)
(74) Representative: TBK
(86) International application number: PCT/JP2005/017788
(87) International publication number: WO 2006/038497

(56) References cited:
- EP-A1- 1 296 394
- WO-A1-01/17047
- WO-A1-02/04658
- WO-A2-02/093669
- GB-A- 2 236 012
- JP-A- 9 245 801
- JP-A- 2001 509 304
- JP-A- 2001 510 932
- JP-A- 2002 025 582
- JP-A- 2003 109 608

## Description

### BACKGROUND OF THE INVENTION

### Field of the Invention

The present invention relates to a method of producing gasket for fuel cells which forms a constituting element of the fuel cells.

### Description of the Conventional Art

As a gasket for a gas flow path of each of cells within a fuel cells stack, it is general to employ a method of using an elastic body as a material thereof and forming a gasket made of the elastic body on a separator.

On the other hand, it is possible to omit seal formation to the separator so as to simplify a cell structure by impregnating a lip forming position of a GDL with a liquid rubber as well as forming a lip on the GDL and thereby securing a sealing property of the GDL itself (refer to Japanese Unexamined Patent Publication No. 2004-95565).

As the GDL, a carbon paper, a carbon cloth or the like is generally employed, however, there is executed a process of coating a micro porous layer (MPL) on one surface or both surfaces of a GDL front layer, for the purpose of making a contact resistance of the GDL surface small or water management.

WO 02/093669 A2 relates to a membrane electrode assembly wherein each gas diffusion substrate comprises a porous electrically conductive sheet material, wherein an integral gasket member is located on the first and second planar faces of a peripheral portion of the sheet material. The electrocatalyst layers are not present adjacent to the gasket members and the edge of the membrane is sandwiched between the gasket members. The invention further relates to integrated cell assemblies and fuel cell stacks comprising membrane electrode assemblies according to the invention.

GB 2236012 A discloses A phosphoric acid fuel cell having integral edge seals formed by an elastomer permeating an outer peripheral band contiguous with the outer peripheral edges of the cathode and anode assemblies and the matrix to form an integral edge seal which is reliable, easy to manufacture and has creep characteristics similar to the anode, cathode and matrix assemblies inboard of the seals to assure good electrical contact throughout the life of the fuel cell.

EP 1 296 394 A1 discloses a constituting part for a fuel battery in which a number of steps of assembling the constituting parts for the fuel battery can be reduced, and in which a replacing property and a maintenance property of fuel battery cell parts can be improved and a cost for parts can be reduced, the structure is made such that a separator made of a carbon plate or the like, a gas diffusion layer made of a carbon fiber or the like, and a gasket made of a liquid rubber cured material or the like are integrally formed, and further, gaskets are respectively provided on both surfaces of a pair of gas diffusion layers holding an independent electrolyte membrane from both sides thereof between the pair.

However, if the MPL is coated on the surface of the GDL as mentioned above, there is a case that the MPL inhibits the impregnation at a time of impregnating the GDL with the liquid rubber. Accordingly, in this case, since it is impossible to form a sufficiently impregnated state, there is a case that a problem is generated in the sealing property.

### SUMMARY OF THE INVENTION

### Problem to be Solved by the Invention

The present invention is made by taking the points mentioned above into consideration, and an object of the present invention is to provide a method of producing gasket for fuel cells, which can prevent an MPL from inhibiting impregnation at a time of impregnating a GDL with a liquid rubber, whereby it is possible to form a sufficiently impregnated state.

### Means for Solving the Problem

In order to achieve the object mentioned above, in accordance with the present invention, there is provided a method of producing gasket for fuel cells according to claim 1.

The method is provided in which GDL made of a porous material is impregnated with a liquid rubber after an MPL is coated on a surface of the GDL, comprising the steps of:
forming an MPL uncoated portion without coating the MPL to a portion of the GDL where a sealing property is necessary, by using a method such as masking or the like at a time of coating the MPL to the surface of the GDL; and
next impregnating the MPL uncoated portion with the liquid rubber.

In accordance with the producing method of the present invention provided with the structure mentioned above, since the MPL is not coated to the portion where the seal property is necessary in the surface of the GDL, it is possible to prevent the MPL from inhibiting the impregnation at a time of impregnating the portion with the liquid rubber.

In other words, since the portion in the GDL where the sealing property is necessary equals to the portion impregnated with the liquid rubber, and the MPL is not coated to the portion, it is possible to prevent the MPL from inhibiting the impregnation at a time of impregnating the portion with the liquid rubber.

### Effect of the Invention

The present invention achieves the following effect.

In the method of producing gasket for fuel cells in accordance with the present invention provided with the structure mentioned above, the MPL is not coated to the portion where the sealing property is necessary in the GDL by using the method such as masking or the like at a time of coating the MPL to the surface of the GDL, so that the MPL uncoated portion is formed there, and the MPL uncoated portion is next impregnated with the liquid rubber. Accordingly, it is possible to prevent the MPL from inhibiting the impregnation at a time of impregnating the MPL uncoated portion with the liquid rubber. Therefore, since it is possible to forma sufficiently impregnated state, it is possible to secure a stable sealing property.

### BRIEF EXPLANATION OF DRAWINGS

Fig. 1 is an explanatory view of a first part of steps in a producing method in accordance with an embodiment of the present invention;
Fig. 2 is an explanatory view of a second part of the step in the producing method;
Fig. 3A is a plan view of a gasket for a fuel cells manufactured by the producing method;
Fig. 3B is an enlarged cross sectional view along a line A-A in Fig. 3A;
Fig. 4A is a plan view of a gasket for a fuel cells manufactured by a producing method in accordance with the other embodiment of the present invention; and
Fig. 4B is an enlarged cross sectional view along a line B-B in Fig. 4A.

### DETAILED DESCRIPTION OF PREFERRED EMBODIMENT

The present invention includes the following modes.
(1) The present invention relates to a gasket for a laminated type fuel cells and a producing method of the same.
(2) In a step of coating an MPL to a GDL, an improved impregnated state is formed in the portion where the sealing property is necessary by not coating the MPL to the portion in accordance with a method such as masking or the like, thereby securing the sealing property.
(3) In a step of applying the MPL to the GDL, the improved impregnated state is formed by further impregnating the uncoated portion with rubber, without coating the MPL inhibiting the impregnation to the portion where the sealing property is necessary by using a method such as masking or the like, thereby imparting the sealing property.
(4) In a step of coating the MPL to the GDL, the stable sealing property is secured by further applying seal formation and the impregnation to the uncoated portion, without coating the MPL being inhibitive at a time of the impregnation and the formation by masking the seal portion.
(5) In a step of coating the MPL to the GDL, the sealing property is secured by further applying the impregnation to the uncoated portion, without coating the MPL being inhibitive at a time of the impregnation and the formation by masking the seal portion.
(6) In accordance with the item (1) to (5) mentioned above, in the case that the MPL is coated to the surface side of the GDL constituting the MEA, it is possible to form an improved impregnated state by not coating the MPL inhibiting the impregnation to the impregnated portion, and it is possible to secure a stable sealing property.

### Embodiment

Next, a description will be given of an embodiment in accordance with the present invention with reference to the accompanying drawings.

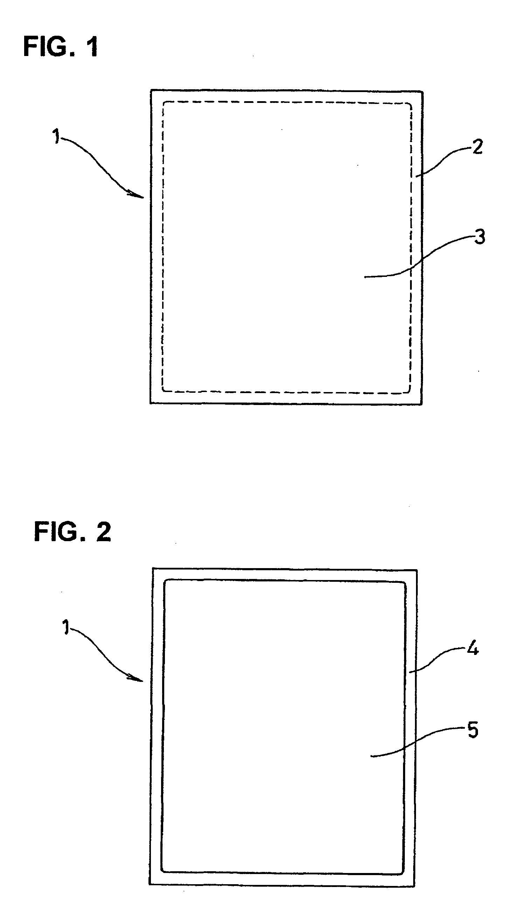

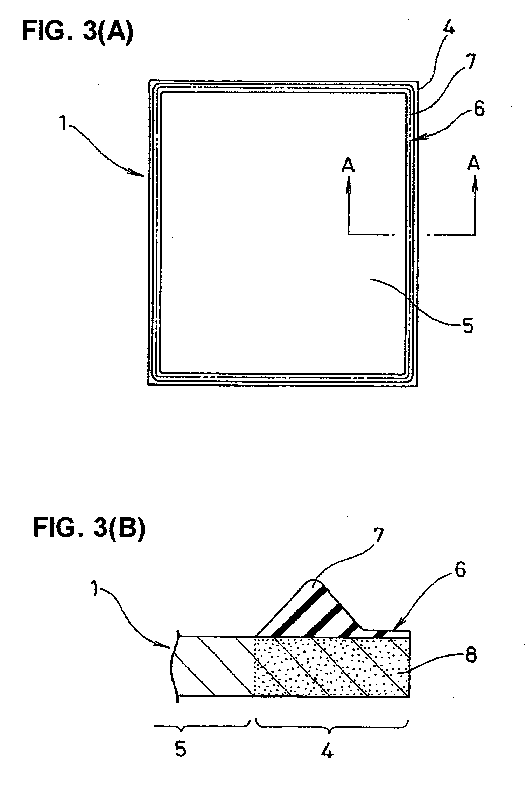

Figs. 1 and 2 show a producing method in accordance with an embodiment of the present invention in step order. Further, Figs. 3A and 3B show a gasket for a fuel cells manufactured in accordance with the producing method.

In Fig. 1, reference numeral 1 denotes a GDL formed in a flat plate shape by a porous material. On a flat surface of the GDL 1, there are set a portion in which a sealing property is necessary (hereinafter, refer also to as a seal necessary portion) 2 at a position along a whole peripheral portion (an outer side of a dotted line in the drawing), and a portion in which the sealing property is not necessary (hereinafter, refer also to as a seal unnecessary portion) 3 at a position in a center portion of the flat surface (an inner side of the dotted line in the drawing). Accordingly, when coating an MPL (not shown) on the surface of the GDL 1, the MPL is coated only to the latter seal unnecessary portion 3 without coating the MPL to the former seal necessary portion 2 by applying a masking (not shown). The masking is removed after coating.

Accordingly, on the flat surface of the GDL 1, as shown in Fig. 2, there is formed an MPL uncoated portion 4 corresponding to the former seal necessary portion 2, and an MPL coated portion 5 corresponding to the latter seal unnecessary portion 3.

Then, a rubber impregnated portion (a gasket base portion) 8 is formed by setting the GDL 1 mentioned above to a metal mold (not shown) so as to make integral formation by a liquid rubber in accordance with an injection molding or the like, forming a lip (a seal lip) 7 of a gasket 6 on the surface of the MPL uncoated portion 4 by the liquid rubber as shown in Fig. 3, and impregnating a part of the liquid rubber into the MPL uncoated portion 4.

Therefore, in accordance with the producing method mentioned above, since it is possible to prevent the MPL from inhibiting the impregnation at a time of impregnating the MPL uncoated portion 4 with the liquid rubber, it is possible to form a sufficiently impregnated state, whereby it is possible to secure a stable sealing performance.

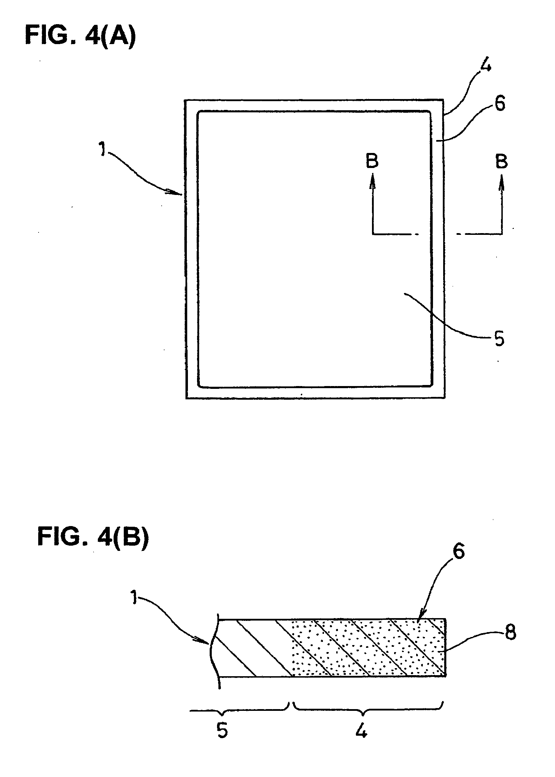

In addition, as shown in Fig. 4, only the rubber impregnated portion 8 may be formed in the MPL uncoated portion 4 of the GDL 1. In this case, an independent gasket interposed between the GDL 1 or a separator and a gasket integrally formed in the separator side (both of which are not shown) is brought into close contact with the rubber impregnated portion 8, whereby sealing is performed.

## Claims

1. A method of producing gasket for fuel cells, in which a GDL (1) made of a porous material is impregnated with a liquid rubber after an MPL is coated on a surface of said GDL (1), comprising the steps of:
forming an MPL uncoated portion (4) without coating said MPL to a portion (2) of said GDL (1) where a sealing property is necessary, by applying a masking on said MPL uncoated portion (4);
coating the MPL to the surface of said GDL (1);
removing said masking after coating said MPL; and
next impregnating said MPL uncoated portion (4) with the liquid rubber.

## Patentansprüche

1. Verfahren zum Herstellen einer Dichtung für Brennstoffzellen, in der eine GDL (1), die aus einem porösen Material hergestellt ist, mit einem flüssigen Gummi imprägniert ist, nachdem eine MPL auf einer Fläche der GDL (1) beschichtet ist, das die folgenden Schritte aufweist:
Ausbilden eines MPL-unbeschichteten Abschnitts (4) ohne ein Beschichten der MPL an einem Abschnitt (2) der GDL (1), an dem eine Dichtungseigenschaft notwendig ist, durch ein Anwenden einer Abdeckung auf dem MPL-unbeschichteten Abschnitt (4);
Beschichten der MPL auf der Fläche der GDL (1);
Entfernen der Abdeckung nach einem Beschichten der MPL; und
anschließend ein Imprägnieren des MPL-unbeschichteten Abschnitts (4) mit dem flüssigen Gummi.

## Revendications

1. Procédé de production de joint d'étanchéité pour piles à combustible, dans lequel une couche de diffusion gazeuse GDL (1) réalisée en un matériau poreux est imprégnée d'un caoutchouc liquide après revêtement d'une surface de ladite couche GDL (1) par une couche microporeuse MPL, comprenant les étapes consistant :
à former une partie (4) non revêtue par une couche MPL sans revêtir une partie (2) de ladite couche GDL (1) par ladite couche MPL où une propriété d'étanchéité est nécessaire, en appliquant un masque sur ladite partie (4) non revêtue par une couche MPL ;
à revêtir la surface de ladite couche GDL (1) par la couche MPL ;
à enlever ledit masque après application du revêtement de ladite couche MPL ; et
à imprégner par la suite ladite partie (4) non revêtue par une couche MPL du caoutchouc liquide.
